# EUROPEAN PATENT SPECIFICATION

(11) **EP 2 767 334 B1**
(45) Date of publication and mention of the grant of the patent: **26.10.2016**
(21) Application number: 12831199.0
(22) Date of filing: 12.09.2012
(51) Int. Cl.: A23L 21/00

(54) **METHOD FOR MANUFACTURING MULTICORE GELATIN MICROCAPSULE**
VERFAHREN ZUR HERSTELLUNG EINER GELATINEMIKROKAPSEL MIT MEHREREN KERNEN
PROCÉDÉ DE FABRICATION DE MICROCAPSULE DE GÉLATINE DE TYPE À PLUSIEURS NOYAUX

(30) Priority: 13.09.2011 JP 2011199178
(43) Date of publication of application: 20.08.2014
(73) Proprietor: Riken Vitamin Co., Ltd., Chiyoda-ku, Tokyo 101-8370 (JP)
(72) Inventor: HAYASAKA, Hideki, Soka-shi Saitama 340-0002 (JP)
(74) Representative: Kalhammer, Georg
(86) International application number: PCT/JP2012/073302
(87) International publication number: WO 2013/039096

(56) References cited:
- EP-A1- 0 982 038
- JP-A- H0 491 750
- JP-A- 2000 079 337
- JP-A- 2001 078 718
- JP-A- 2003 047 432
- US-B1- 6 444 227
- ZHIJIAN DONG: 'Morphology and release profile of microcapsules encapsulating peppermint oil by complex coacervation' JOURNAL OF FOOD ENGINEERING vol. 104, no. 3, June 2011, pages 455 - 460, XP028154580

## Description

### TECHNICAL FIELD

The present invention relates to a method for producing a multicore gelatin microcapsule.

### BACKGROUND ART

In the fields of foods and pharmaceutical products containing flavoring agents, sweeteners, vitamins, and other ingredients, multicore microcapsules have been used as a means, for example, for suppressing oxidation and deterioration of (for imparting stability to) the ingredient or for reducing the dissolution rate of the ingredient in the oral cavity or the like (for imparting controlled release properties). Such multicore microcapsules comprise a film-forming substance, which is typically exemplified by gelatin, agar, carrageenan, gellan gum, and pectin. In particular, a microcapsule comprising gelatin as the film-forming substance (hereinafter, also called multicore gelatin microcapsule) is excellent in oxygen barrier properties and thus is preferably used for example in the case where the ingredient must be prevented from oxidation.

As the food preferences of consumers have diversified, there is an increasing demand for foods that can provide the pleasure of enjoying a change in flavor during eating or chewing. In order to provide such a food, studies have been done on the use of the above-mentioned multicore gelatin microcapsules for encapsulation of a flavoring agent having a flavor different from the one that is sensed at the start of eating or chewing (hereinafter, also called original flavor).

A known example of the multicore gelatin microcapsules is a microcapsule for increasing the storage stability of an oil containing tocopherol and tocotrienol, the microcapsule having a multicore structure that comprises the oil containing tocopherol and tocotrienol as core substances and a gelatin preferably having a jelly strength of 100 bloom or more as a film-forming substance (for example, Patent Literature 1). However, when this microcapsule is used in foods such as gum, it disintegrates so immediately in the oral cavity that the flavor of a flavoring agent in the microcapsule is mixed with an original flavor. Thus, the microcapsule is unsuited for foods that can provide the pleasure of enjoying a change in flavor.

A method of producing a microcapsule having much higher strength by formation of crosslinks in a protein gelling agent such as gelatin by the action of transglutaminase is also known (for example, Patent Literature 2). When the multicore gelatin microcapsule obtained by this method is used in foods such as gum, it can delay the emanation of a flavor and make the flavor last long. However, the flavor emanates so gradually that the change in flavor is unlikely to be perceived. On this account, there is a demand for a multicore gelatin microcapsule that contains a flavoring agent and gives a clearly perceivable emanation peak of a flavor of the flavoring agent in the oral cavity at a certain time after the start of eating or chewing (hereinafter, also called flavor emanation peak).

### CITATION LIST

### PATENT LITERATURE

Patent Literature 1: Japanese Patent Application Publication No. 2003-055219
Patent Literature 2: Japanese Patent Application Publication No. 10-191950
Patent document 3, US 6 444 227 B1, discloses a method for producing microbeadlets containing fat soluble substances by (a) forming an O/W emulsion of a fat soluble substance and a gelatin-containing aqueous phase, (b) cross-linking the gelatin matrix by using transglutaminase, and (c) converting the emulsion into a powder by spray drying and cooling.
Patent document 4, EP 0 982 038, discloses a process for the preparation of composition containing an active ingredient by (a) mixing an aqueous solution of cross-linkable protein such as gelatin, transglutaminase and the active ingredient to form an O/W emulsion; (b) converting the emulsion into a powder by spray drying and cooling.

### SUMMARY OF INVENTION

### TECHNICAL PROBLEM

The present invention has an object to provide a method for producing a multicore gelatin microcapsule that contains a flavoring agent and gives a perceivable flavor emanation peak in the oral cavity at a certain time (for example, from about 1 minute 30 seconds to less than about 4 minutes) after the start of eating or chewing.

### SOLUTION TO PROBLEM

As a result of intensive studies for solving the problem, the inventor of the present invention has surprisingly found that the problem can be solved by a method for producing a multicore gelatin microcapsule comprising adjusting the gelatin content to fall within a certain range in a mixed solution composed of a transglutaminase and an oil-in-water emulsion composition containing gelatin and a flavoring agent, and on the basis of the findings, has completed the present invention.

That is, the present invention relates to a method for producing a multicore gelatin microcapsule, and the method comprises the steps of: (a) adding a transglutaminase to an oil-in-water emulsion composition containing gelatin and a flavoring agent to yield a mixed solution containing the gelatin in an amount of 10 to 25% by mass (hereinafter, also called step (a)) and (b) spraying the mixed solution and cooling and solidifying the sprayed solution (hereinafter, also called step (b)), wherein in the preparation of the oil-in-water emulsion composition the flavoring agent is added as an oil phase to the aqueous phase, and wherein a flavor emanation peak of the flavoring agent in the oral cavity after start of eating or chewing the multicore gelatin microcapsule falls within the range of from 1 minute 30 seconds to less than 4 minutes.

### ADVANTAGEOUS EFFECTS OF INVENTION

The multicore gelatin microcapsule of the present invention allows the flavor of a flavoring agent contained therein to emanate in the oral cavity with a clearly perceivable peak at a certain time after the start of eating or chewing. When the multicore gelatin microcapsule of the present invention is used in a food, the flavor of a flavoring agent contained in the capsule emanates with a clear peak during eating or chewing of the food. On this account, for example, by adding, to a food, a multicore gelatin microcapsule containing a flavoring agent having a flavor that differs from the original flavor of the food, a food that can provide a change in flavor can be obtained. In addition, in the multicore gelatin microcapsule of the present invention, the time elapsing from the start of eating or chewing to a flavor emanation peak (hereinafter, also called time to the flavor emanation peak) is typically shorter (for example from about 1 minute 30 seconds to less than about 4 minutes) than the retention time of a food (such as a chewing gum) in the oral cavity, and thus the microcapsule is preferably used for a food that can provide the pleasure of enjoying a change in flavor. The method of the present invention has good production efficiency and thus is industrially advantageous.

### BRIEF DESCRIPTION OF DRAWINGS

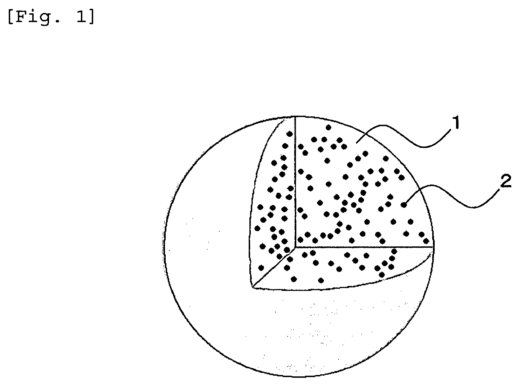

Fig. 1 is a schematic view showing an embodiment of the multicore gelatin microcapsule of the present invention.

### DESCRIPTION OF EMBODIMENTS

A multicore gelatin microcapsule obtained by the production method of the present invention comprises gelatin as a film-forming substance and has the structure in which core substances 2 are uniformly dispersed in the film-forming substance 1 as shown in Fig. 1, for example. In the present invention, the core substances contain a flavoring agent. The core substances typically have an average particle size of about 50 µm or less, preferably about 20 µm or less, and more preferably about 10 µm or less.

The average particle size of the multicore gelatin microcapsule of the present invention is not particularly limited as long as the effects of the invention are not impaired, and it is preferably about 100 to 1,200 µm. For good production efficiency and the like, the average particle size is more preferably about 100 to 1,000 µm. The average particle size can be controlled by appropriately adjusting the rotation speed of a rotary spray nozzle used in a production method described below. Microcapsules having an average particle size of less than 100 µm are intrinsically difficult to produce because a solution sprayed from a nozzle floats in a column or adheres onto the inner wall of a column. Microcapsules having an average particle size of more than 1,200 µm are not preferred because a sprayed solution is prevented from solidifying during cooling in a column and thus fails to form spherical microcapsules.

The average particle size is determined by measuring a particle size distribution with a sieve having an appropriate opening size in accordance with Powder Particle Size Determination (Method 2: Analytical Sieving Method) in Japanese Pharmacopoeia, Fifteenth Edition and then calculating a 50% cumulative average particle size.

The gelatin used in the present invention is not particularly limited as long as the effects of the invention are not impaired, and examples of the gelatin include collagens contained in fish, cattle, swine, chickens, and the like and products resulting from heat denaturation of the collagens. The gelatin of the present invention also includes gelatin hydrolysates prepared by hydrolysis of gelatin with a protease such as collagenase and cysteine protease. Among the gelatins, a gelatin that is determined to be unable to gel according to the jelly strength test specified in "Animal glues and gelatins" in the Japanese Industrial Standards (JIS) K 6503-1996 is also called collagen peptide. The collagen peptide is exemplified by HBC-P20 (product name; derived from swine; manufactured by Nitta Gelatin Inc.) and the like, which are commercially produced and available, and the collagen peptide can be used in the present invention.

The weight average molecular weight of the gelatin used in the present invention is not particularly limited as long as the effects of the invention are not impaired, and it is preferably about 10,000 to 40,000. For flavor emanation with a clearer peak and other purposes, the weight average molecular weight is more preferably about 10,000 to 35,000. A gelatin having a weight average molecular weight of more than 40,000 is not preferred because the capsule is likely to adhere to teeth during eating or chewing, and a gelatin having a weight average molecular weight of less than 10,000 is not preferred because the multicore gelatin microcapsule to be produced cannot retain its shape. In the present invention, two or more kinds of gelatins having different weight average molecular weights can be used in combination. In such a combined use of gelatins, the overall weight average molecular weight is preferably adjusted to fall within the preferred numerical range described above.

Here, the weight average molecular weight of a gelatin hydrolysate is determined in accordance with the methods specified in "20-1 Molecular weight distribution" and "20-2 Average molecular weight" in "PAGI METHOD, Tenth edition" (Commission on Testing Method for Photographic Gelatin, 2006).

The flavoring agent used in the present invention is not particularly limited as long as the effects of the invention are not impaired, and examples of the flavoring agent include synthetic flavoring compounds such as L-menthol; essential oils of citrus fruits such as oranges, lemons, limes, and grapefruits; plant essential oils such as flower oils, peppermint oils, spearmint oils, and spice oils; oil extracts such as kola nut extracts, coffee extracts, vanilla extracts, cocoa extracts, tea extracts, and spice extracts and oleoresins of these extracts; oily mixed flavoring compositions and oily flavoring agents as any mixture thereof; and powdery flavoring agents prepared by drying the foregoing with a diluent. In the case where the multicore gelatin microcapsule of the present invention is used in a food, the flavoring agent may have the same or similar flavor as the original flavor of the food or may have a different flavor from the original flavor. A flavoring agent having the different flavor is preferably used because the resulting food can provide the pleasure of enjoying a change in flavor.

The transglutaminase used in the present invention is an enzyme that catalyzes an acyl transfer reaction of the γ-carboxyamino group of a glutamine residue in a peptide chain, and the enzyme acts on a lysine residue in a protein as an acyl acceptor for formation of an ε-(γ-Glu)-Lys cross-linked structure (for a cross-linking reaction) in a molecule or between molecules. The transglutaminase includes calcium independent transglutaminases and calcium dependent transglutaminases, both of which are usable. The calcium independent transglutaminases are, however, preferably used. The transglutaminase is exemplified by Activa TG-K (product name; manufactured by Ajinomoto Co., Inc.) and the like. These are commercially produced and available, and can be used in the present invention.

The method of the present invention for producing a multicore gelatin microcapsule comprises the steps of: (a) adding a transglutaminase to an oil-in-water emulsion composition containing gelatin and a flavoring agent to yield a mixed solution containing the gelatin in an amount of about 10 to 25% by mass (step (a)) and (b) spraying the mixed solution and cooling and solidifying the sprayed solution (step (b)). In the production method, the gelatin content in the mixed solution is adjusted to about 10 to 25% by mass, thereby allowing the flavor to emanate with a perceivable peak. A mixed solution containing gelatin in an amount of more than about 25% is not preferred because the flavor emanation peak is not perceivable. A mixed solution containing gelatin in an amount of less than about 10% is not preferred because the resulting capsule is so brittle as to immediately disintegrate in the oral cavity.

In the multicore gelatin microcapsule of the present invention, the time to the flavor emanation peak is shorter than the general retention time of a food in the oral cavity, and thus the multicore gelatin microcapsule is preferably used in a food. The time to the flavor emanation peak can be controlled by changing the gelatin content in the mixed solution within the range of about 10 to 25% by mass. In the multicore gelatin microcapsule of the present invention, the time to the flavor emanation peak is typically about 1 minute 30 seconds to less than about 4 minutes. For flavor emanation with a more clearly perceivable peak and other purposes, the time to the flavor emanation peak is more preferably about 1 minute 30 seconds to less than about 3 minutes.

The step (a) is a step of adding a transglutaminase to an oil-in-water emulsion composition containing gelatin and a flavoring agent to yield a mixed solution containing the gelatin in an amount of about 10 to 25% by mass.

The method for preparing the oil-in-water emulsion composition is not particularly limited as long as the effects of the invention are not impaired. The oil-in-water emulsion composition can be prepared, for example, by adding gelatin and an emulsifier to water, warming the mixture to yield a dissolved aqueous phase, adding a flavoring agent as an oil phase to the aqueous phase, and stirring the mixture to yield a uniformly emulsified and dispersed composition. The temperature for warming the mixture is not particularly limited as long as the effects of the invention are not impaired, and it is preferably about 40 to 90°C and more preferably about 40 to 60°C for good production efficiency and the like. The temperature for preparing the emulsified and dispersed composition is not particularly limited as long as the effects of the invention are not impaired, and it is preferably about 40 to 60°C, more preferably about 40 to 50°C, and most preferably around 50°C for good production efficiency and the like.

The emulsifier is not particularly limited as long as the effects of the invention are not impaired, and examples of the emulsifier include glycerol fatty acid ester, sorbitan fatty acid ester, sucrose fatty acid ester, polyoxyethylene sorbitan fatty acid ester, ascorbyl palmitate, and lecithin. For good production efficiency and the like, glycerol fatty acid ester, sorbitan fatty acid ester, and lecithin are preferred. In the present invention, these emulsifiers may be used alone or in any combination of two or more kinds. Examples of the glycerol fatty acid ester include, in addition to esters of glycerol and fatty acids, glycerol acetate, acetic and fatty acid esters of glycerol, lactic and fatty acid esters of glycerol, citric and fatty acid esters of glycerol, succinic and fatty acid esters of glycerol, diacetyl tartaric and fatty acid esters of glycerol, and polyglycerol fatty acid ester. For good production efficiency and the like, succinic and fatty acid esters of glycerol, diacetyl tartaric and fatty acid esters of glycerol, and the like are particularly preferred.

The aqueous phase may be prepared by adding, in addition to the gelatin and the emulsifier, a sugar (for example, D-sorbitol, maltitol, and granulated sugar), an anti-oxidizing agent, a stabilizer, and other additives, as necessary.

In the stirring procedure, a high-speed rotary dispersing and emulsifying device such as TK Homomixer (manufactured by PRIMIX Corporation) and CLEARMIX (manufactured by M Technique Co., Ltd.) can be used. The stirring conditions can be selected as appropriate unless the effects of the invention are impaired. For good production efficiency and the like, the rotation speed is preferably about 3,000 to 15,000 rpm, and the stirring time is preferably about 5 to 60 minutes.

The amounts of the gelatin, the emulsifier, water, and the flavoring agent relative to 100% by mass of the oil-in-water emulsion composition are not particularly limited as long as the effects of the invention are not impaired. The amount of the gelatin relative to 100% by mass of the oil-in-water emulsion composition is selected so that the gelatin content in the mixed solution would be about 10 to 25% by mass, and for example, it is typically about 11 to 30% by mass. The amount of the emulsifier relative to 100% by mass of the oil-in-water emulsion composition is, for example, typically about 0.001 to 5% by mass and preferably about 0.005 to 1% by mass for good production efficiency and the like. The amount of water relative to 100% by mass of the oil-in-water emulsion composition is, for example, typically about 30 to 77% by mass and preferably about 50 to 70% by mass for good production efficiency and the like. The amount of the flavoring agent relative to 100% by mass of the oil-in-water emulsion composition is, for example, typically about 1 to 40% by mass and preferably about 3 to 30% by mass for flavor emanation with a more clearly perceivable peak and other purposes.

The method for preparing the mixed solution is not particularly limited as long as the effects of the invention are not impaired. The mixed solution can be prepared, for example, by suspending a transglutaminase in water to yield a transglutaminase suspension, and then adding the transglutaminase suspension to the oil-in-water emulsion composition to yield a uniform dispersion.

The amount of the transglutaminase added to the oil-in-water emulsion composition is not particularly limited as long as the effects of the invention are not impaired. For good production efficiency, flavor emanation with a more clearly perceivable peak, and other purposes, the transglutaminase is preferably added in about 0.1 to 100 units and more preferably about 1 to 10 units per gram of the gelatin. In the case where Activa TG-K (product name; manufactured by Ajinomoto Co., Inc.) is used as the transglutaminase, 1 g of the transglutaminase relative to 1 g of gelatin corresponds to 100 units.

In the preparation of the mixed solution, any apparatus capable of uniformly dispersing the transglutaminase suspension in the oil-in-water emulsion composition can be used without particular limitation. Examples of the apparatus for a batch system include stirring chambers with paddles or propeller blades and agihomomixers, and examples of the apparatus for a continuous system include line mixing apparatuses such as line mixers, line homomixers, and static mixers.

The step (b) is a step of spraying the mixed solution and cooling and solidifying the sprayed solution.

In the spraying procedure, for example, a pressure spray nozzle, a rotary spray nozzle, or a rotary disc can be used, and a rotary spray nozzle or the like is preferably used because the particle size can be easily controlled. For the rotary spray nozzle, the preferred rotation speed is, for example, about 200 to 2,000 rpm.

The cooling and solidifying procedure is not particularly limited as long as the effects of the invention are not impaired, and it is performed, for example, by spraying the mixed solution into a column filled with liquid nitrogen. In this case, the sprayed mixed solution is cooled, drops down in the column and turns into frozen microparticles in the bottom part of the column. The cooling temperature is not particularly limited as long as the effects of the invention are not impaired, and it is preferably about -196 to -15°C and more preferably about -120 to -20°C for good production efficiency and the like.

In terms of production efficiency and the like, the frozen microparticles are preferably allowed to stand at about 15 to 22°C and more preferably about 15 to 20°C, and thereby a reaction catalyzed by the transglutaminase proceeds. After the completion of the reaction, the microparticles are dried to an intended water content with a forced-air dryer with shelves, a fluidized bed dryer, a vacuum-freeze dryer, or other similar dryers, thus yielding the multicore gelatin microcapsule of the present invention.

The time of the reaction catalyzed by the transglutaminase varies with, for example, the gelatin content in the gelatin-transglutaminase mixed solution and is not constant. The reaction time can be selected as appropriate unless the effects of the invention are impaired. For example, in order to prevent the multicore gelatin microcapsule of the present invention from easily disintegrating at the temperature in the oral cavity during eating or chewing, it is preferable that the reaction is terminated once it is observed that the microparticles sampled at an appropriate time during the reaction are insoluble in water at about 36°C at least. In the case where the microparticles collected after the completion of the reaction in the step are insoluble in water at about 80°C or higher, a flavor is unlikely to emanate. For flavor emanation with a clearer peak, it is preferable that the microparticles are soluble in water at about 80°C or higher. The reaction time is thus preferably selected so that the resulting microparticles are insoluble in water at about 36°C but are soluble in water at about 80°C. Even if the reaction time is selected so that the resulting microparticles are insoluble in water at about 36°C but are soluble in water at about 80°C as described above, an excessively short reaction time (for example, less than 60 seconds) is unfavorable because of production difficulty, and an excessively long reaction time (for example, 100 hours or more) is also unfavorable because of poor production efficiency.

In the case where the drying procedure was performed using a fluidized bed dryer, a glycerol fatty acid ester may be added to 100% by mass of the microparticles before drying. The amount of the glycerol fatty acid ester is preferably about 0.1 to 10% by mass and more preferably about 0.5 to 4% for prevention of the particles from adhering to each other after the drying procedure.

The amount of the flavoring agent relative to 100% by mass of the multicore gelatin microcapsule of the present invention is typically about 0.1 to 80% by mass. For flavor emanation with a more clearly perceivable peak and other purposes, the amount of the flavoring agent is preferably about 1 to 70% by mass. As for characteristic values of the multicore gelatin microcapsule of the present invention, the water content is typically about 10.0% by mass or less and preferably about 7.0% by mass or less.

The water content is determined in accordance with "the Japanese Pharmacopoeia, General Tests, Processes and Apparatus, Water Determination (Karl Fischer Method)".

In the production method of the present invention, sweeteners, functional substances, coloring agents, enzymes, and other additives usable in foods can be used as additional raw materials as long as the objects and the effects of the present invention are not impaired.

The sweetener is not particularly limited as long as the effects of the invention are not impaired, and examples of the sweetener include aspartame and neotame.

The functional substance is not particularly limited as long as the effects of the invention are not impaired, and examples of the functional substance include β-carotene, vitamin A and derivatives thereof, the vitamin Bs and derivatives thereof, the vitamin Ds and derivatives thereof, vitamin E and derivatives thereof, vitamin K and derivatives thereof, chitin, chitosan, propolis, royal jelly, coenzyme Q10, α-lipoic acid, DHA, EPA, linoleic acid, linolenic acid, minerals, and mineral-containing yeasts.

The coloring agent is not particularly limited as long as the effects of the invention are not impaired, and examples of the coloring agent include β-carotene, annatto pigments, and marigold pigments.

The enzyme is not particularly limited as long as the effects of the invention are not impaired, and examples of the enzyme include superoxide dismutase and polyphenol oxidase.

The multicore gelatin microcapsule of the present invention can be directly used as a food or can be added to a food. The food to which the multicore gelatin microcapsule of the present invention is added is not particularly limited as long as the effects of the invention are not impaired, and examples of the food include confectioneries such as baked goods, chocolates, chewing gums, candies, and gummi candies; desserts such as yogurts, ice creams, and puddings; and tablet candies produced by compression of the ingredients including a powdery additive such as a diluent. Among them, chewing gums, candies, gummi candies, tablet candies, and the like are preferred because the retention time of such foods in the oral cavity is longer than the time to the flavor emanation peak, and chewing gums are more preferred.

The present invention will next be described in further detail with reference to examples, but the invention is not limited to them and can be variously modified within the technical idea of the present invention by a person skilled in the art.

### EXAMPLES

### Example 1

To 140 g of purified water, 60 g of gelatin (product name: RGB; derived from swine; manufactured by Nitta Gelatin Inc.), 2 g of succinic and fatty acid esters of glycerol (product name: Poem B-10; manufactured by Riken Vitamin Co., Ltd.), and 1 g of D-sorbitol (product name: Sorbitol FP; manufactured by B Food Science Co., Ltd.) were added, and the mixture was heated at 60°C for complete dissolution and then cooled to 50°C, yielding an aqueous phase. Additionally, as a flavoring agent, 40 g of L-menthol (manufactured by Takasago International Corporation) was melted at 50°C to yield an oil phase. The oil phase was added to the aqueous phase maintained at 50°C, and the mixture was stirred at 10,000 rpm with TK Homomixer (manufactured by PRIMIX Corporation) for complete emulsification and then degassed under a reduced pressure of -60 kPa (G), thus yielding an oil-in-water emulsion composition.

Additionally, 3 g of transglutaminase (product name: Activa TG-K; manufactured by Ajinomoto Co., Inc.) was suspended in 20 g of purified water to yield a transglutaminase suspension.

Next, the oil-in-water emulsion composition and the transglutaminase suspension were mixed by using a line mixer (machine name: Line static mixer; manufactured by Noritake Co., Limited) to yield a paste for granulation (gelatin-transglutaminase mixed solution). The paste was fed to a spray cooler of which a column bottom part was cooled with liquid nitrogen, and sprayed from a rotary spray nozzle rotating at a rotation speed of 500 rpm to allow spherical granules to be formed. The sprayed paste was cooled and then dropped down to the column bottom part, and the resulting frozen particles were collected. Then, 200 g of the collected particles and 4 g of polyglycerol fatty acid ester (product name: Poem HB; manufactured by Riken Vitamin Co., Ltd.) were mixed and then allowed to stand in an incubator at 20°C for the reaction to proceed.

At 12 hours after the start of the incubation, 0.1 g of the particles in the reaction mixture were sampled and suspended in 100 g of purified water at 36°C. The sampled particles were shown not to be dissolved, and thus the reaction was terminated. Here, 0.1 g of the particles were suspended in purified water at 80°C. The particles were shown to be dissolved. After the completion of the reaction, the particles were dried in a fluidized bed dryer (model: LAB-1; manufactured by Powrex Corp.) at 15°C for 2 hours, at 30°C for 1 hour, and at 50°C for 1 hour in this order. The dried particles were sieved through a No. 16 mesh sieve (with openings of 1,000 µm), and 75 g of the particles passed through the mesh sieve were obtained as multicore gelatin microcapsules containing L-menthol (Example Product 1).

### Example 2

To 150 g of purified water, 50 g of gelatin (product name: RGB; derived from swine; manufactured by Nitta Gelatin Inc.), 2 g of succinic and fatty acid esters of glycerol (product name: Poem B-10; manufactured by Riken Vitamin Co., Ltd.), and 1 g of D-sorbitol (product name: Sorbitol FP; manufactured by B Food Science Co., Ltd.) were added, and the mixture was heated at 60°C for complete dissolution and then cooled to 50°C, yielding an aqueous phase. Additionally, as a flavoring agent, 40 g of L-menthol (manufactured by Takasago International Corporation) was melted at 50°C to yield an oil phase. The oil phase was added to the aqueous phase maintained at 50°C, and the mixture was stirred at 10,000 rpm with TK Homomixer (manufactured by PRIMIX Corporation) for complete emulsification and then degassed under a reduced pressure of -60 kPa (G), thus yielding an oil-in-water emulsion composition.

Additionally, 3 g of transglutaminase (product name: Activa TG-K; manufactured by Ajinomoto Co., Inc.) was suspended in 20 g of purified water to yield a transglutaminase suspension.

Next, the oil-in-water emulsion composition and the transglutaminase suspension were mixed by using a line mixer (machine name: Line static mixer; manufactured by Noritake Co., Limited) to yield a paste for granulation (gelatin-transglutaminase mixed solution). The paste was fed to a spray cooler of which a column bottom part was cooled with liquid nitrogen, and sprayed from a rotary spray nozzle rotating at a rotation speed of 500 rpm to allow spherical granules to be formed. The sprayed paste was cooled and then dropped down to the column bottom part, and the resulting frozen particles were collected. Then, 200 g of the collected particles and 4 g of polyglycerol fatty acid ester (product name: Poem HB; manufactured by Riken Vitamin Co., Ltd.) were mixed and then allowed to stand in an incubator at 20°C for the reaction to proceed.

At 12 hours after the start of the incubation, 0.1 g of the particles in the reaction mixture were sampled and suspended in 100 g of purified water at 36°C. The particles became dissolved in the purified water. At 24 hours after the start of the incubation, the same operation was carried out. The particles were shown not to be dissolved in purified water at 36°C, and thus the reaction was terminated. Here, 0.1 g of the particles were suspended in purified water at 80°C. The particles were shown to be dissolved. After the completion of the reaction, the particles were dried in a fluidized bed dryer (model: LAB-1; manufactured by Powrex Corp.) at 15°C for 2 hours, at 30°C for 1 hour, and at 50°C for 1 hour in this order. The dried particles were sieved through a No. 16 mesh sieve (with openings of 1,000 µm), and 70 g of the particles passed through the mesh sieve were obtained as multicore gelatin microcapsules containing L-menthol (Example Product 2).

### Example 3

To 160 g of purified water, 40 g of gelatin (product name: RGB; derived from swine; manufactured by Nitta Gelatin Inc.), 2 g of succinic and fatty acid esters of glycerol (product name: Poem B-10; manufactured by Riken Vitamin Co., Ltd.), and 1 g of D-sorbitol (product name: Sorbitol FP; manufactured by B Food Science Co., Ltd.) were added, and the mixture was heated at 60°C for complete dissolution and then cooled to 50°C, yielding an aqueous phase. Additionally, as a flavoring agent, 40 g of L-menthol (manufactured by Takasago International Corporation) was melted at 50°C to yield an oil phase. The oil phase was added to the aqueous phase maintained at 50°C, and the mixture was stirred at 10,000 rpm with TK Homomixer (manufactured by PRIMIX Corporation) for complete emulsification and then degassed under a reduced pressure of -60 kPa (G), thus yielding an oil-in-water emulsion composition.

Additionally, 3 g of transglutaminase (product name: Activa TG-K; manufactured by Ajinomoto Co., Inc.) was suspended in 20 g of purified water to yield a transglutaminase suspension.

Next, the oil-in-water emulsion composition and the transglutaminase suspension were mixed by using a line mixer (machine name: Line static mixer; manufactured by Noritake Co., Limited) to yield a paste for granulation (gelatin-transglutaminase mixed solution). The paste was fed to a spray cooler of which a column bottom part was cooled with liquid nitrogen, and sprayed from a rotary spray nozzle rotating at a rotation speed of 500 rpm to allow spherical granules to be formed. The sprayed paste was cooled and then dropped down to the column bottom part, and the resulting frozen particles were collected. Then, 200 g of the collected particles and 4 g of polyglycerol fatty acid ester (product name: Poem HB; manufactured by Riken Vitamin Co., Ltd.) were mixed and then allowed to stand in an incubator at 20°C for the reaction to proceed.

At 12 hours after the start of the incubation, 0.1 g of the particles in the reaction mixture were sampled and suspended in 100 g of purified water at 36°C. The sampled particles were shown not to be dissolved, and thus the reaction was terminated. Here, 0.1 g of the particles were suspended in purified water at 80°C. The particles were shown to be dissolved. After the completion of the reaction, the particles were dried in a fluidized bed dryer (model: LAB-1; manufactured by Powrex Corp.) at 15°C for 2 hours, at 30°C for 1 hour, and at 50°C for 1 hour in this order. The dried particles were sieved through a No. 16 mesh sieve (with openings of 1,000 µm), and 60 g of the particles passed through the mesh sieve were obtained as multicore gelatin microcapsules containing L-menthol (Example Product 3).

### Example 4

To 170 g of purified water, 30 g of gelatin (product name: RGB; derived from swine; manufactured by Nitta Gelatin Inc.), 2 g of succinic and fatty acid esters of glycerol (product name: Poem B-10; manufactured by Riken Vitamin Co., Ltd.), and 1 g of D-sorbitol (product name: Sorbitol FP; manufactured by B Food Science Co., Ltd.) were added, and the mixture was heated at 60°C for complete dissolution and then cooled to 50°C, yielding an aqueous phase. Additionally, as a flavoring agent, 40 g of L-menthol (manufactured by Takasago International Corporation) was melted at 50°C to yield an oil phase. The oil phase was added to the aqueous phase maintained at 50°C, and the mixture was stirred at 10,000 rpm with TK Homomixer (manufactured by PRIMIX Corporation) for complete emulsification and then degassed under a reduced pressure of -60 kPa (G), thus yielding an oil-in-water emulsion composition.

Additionally, 3 g of transglutaminase (product name: Activa TG-K; manufactured by Ajinomoto Co., Inc.) was suspended in 20 g of purified water to yield a transglutaminase suspension.

Next, the oil-in-water emulsion composition and the transglutaminase suspension were mixed by using a line mixer (machine name: Line static mixer; manufactured by Noritake Co., Limited) to yield a paste for granulation (gelatin-transglutaminase mixed solution). The paste was fed to a spray cooler of which a column bottom part was cooled with liquid nitrogen, and sprayed from a rotary spray nozzle rotating at a rotation speed of 500 rpm to allow spherical granules to be formed. The sprayed paste was cooled and then dropped down to the column bottom part, and the resulting frozen particles were collected. Then, 200 g of the collected particles and 4 g of polyglycerol fatty acid ester (product name: Poem HB; manufactured by Riken Vitamin Co., Ltd.) were mixed and then allowed to stand in an incubator at 20°C for the reaction to proceed.

At 12 hours after the start of the incubation, 0.1 g of the particles in the reaction mixture were sampled and suspended in 100 g of purified water at 36°C. The particles became dissolved in the purified water. After that, the same operation was carried out every 12 hours. At 96 hours after the start of the incubation, it was finally shown that the particles were not dissolved in purified water at 36°C, and thus the reaction was terminated. Here, 0.1 g of the particles were suspended in purified water at 80°C. The particles were shown to be dissolved. After the completion of the reaction, the particles were dried in a fluidized bed dryer (model: LAB-1; manufactured by Powrex Corp.) at 15°C for 2 hours, at 30°C for 1 hour, and at 50°C for 1 hour in this order. The dried particles were sieved through a No. 16 mesh sieve (with openings of 1,000 µm), and 55 g of the particles passed through the mesh sieve were obtained as multicore gelatin microcapsules containing L-menthol (Example Product 4).

### Comparative Example 1

To 130 g of purified water, 70 g of gelatin (product name: RGB; derived from swine; manufactured by Nitta Gelatin Inc.), 2 g of succinic and fatty acid esters of glycerol (product name: Poem B-10; manufactured by Riken Vitamin Co., Ltd.), and 1 g of D-sorbitol (product name: Sorbitol FP; manufactured by B Food Science Co., Ltd.) were added, and the mixture was heated at 60°C for complete dissolution and then cooled to 50°C, yielding an aqueous phase. Additionally, as a flavoring agent, 40 g of L-menthol (manufactured by Takasago International Corporation) was melted at 50°C to yield an oil phase. The oil phase was added to the aqueous phase maintained at 50°C, and the mixture was stirred at 10,000 rpm with TK Homomixer (manufactured by PRIMIX Corporation) for complete emulsification and then degassed under a reduced pressure of -60 kPa (G), thus yielding an oil-in-water emulsion composition.

Additionally, 3 g of transglutaminase (product name: Activa TG-K; manufactured by Ajinomoto Co., Inc.) was suspended in 20 g of purified water to yield a transglutaminase suspension.

Next, the oil-in-water emulsion composition and the transglutaminase suspension were mixed by using a line mixer (machine name: Line static mixer; manufactured by Noritake Co., Limited) to yield a paste for granulation (gelatin-transglutaminase mixed solution). The paste was fed to a spray cooler of which a column bottom part was cooled with liquid nitrogen, and sprayed from a rotary spray nozzle rotating at a rotation speed of 500 rpm. The sprayed paste was cooled and then dropped down to the column bottom part, and the resulting frozen particles were collected. Then, 200 g of the collected particles and 4 g of polyglycerol fatty acid ester (product name: Poem HB; manufactured by Riken Vitamin Co., Ltd.) were mixed and then allowed to stand in an incubator at 20°C for the reaction to proceed.

Immediately after the start of the incubation, 0.1 g of the particles were sampled and suspended in 100 g of purified water at different temperatures, i.e. 36°C and 80°C. The sampled particles were insoluble in purified water at either temperature. This is because the reaction had excessively proceeded. The reaction was immediately terminated, and the resulting particles were dried in a fluidized bed dryer (model: LAB-1; manufactured by Powrex Corp.) at 15°C for 2 hours, at 30°C for 1 hour, and at 50°C for 1 hour in this order. The dried particles were sieved through a No. 16 mesh sieve (with openings of 1,000 µm), and 30 g of the particles passed through the mesh sieve were obtained as multicore gelatin microcapsules containing L-menthol (Comparative Example Product 1).

### Comparative Example 2

To 180 g of purified water, 20 g of gelatin (product name: RGB; derived from swine; manufactured by Nitta Gelatin Inc.), 2 g of succinic and fatty acid esters of glycerol (product name: Poem B-10; manufactured by Riken Vitamin Co., Ltd.), and 1 g of D-sorbitol (product name: Sorbitol FP; manufactured by B Food Science Co., Ltd.) were added, and the mixture was heated at 60°C for complete dissolution and then cooled to 50°C, yielding an aqueous phase. Additionally, as a flavoring agent, 40 g of L-menthol (manufactured by Takasago International Corporation) was melted at 50°C to yield an oil phase. The oil phase was added to the aqueous phase maintained at 50°C, and the mixture was stirred at 10,000 rpm with TK Homomixer (manufactured by PRIMIX Corporation) for complete emulsification and then degassed under a reduced pressure of -60 kPa (G), thus yielding an oil-in-water emulsion composition.

Additionally, 3 g of transglutaminase (product name: Activa TG-K; manufactured by Ajinomoto Co., Inc.) was suspended in 20 g of purified water to yield a transglutaminase suspension.

Next, the oil-in-water emulsion composition and the transglutaminase suspension were mixed by using a line mixer (machine name: Line static mixer; manufactured by Noritake Co., Limited) to yield a paste for granulation (gelatin-transglutaminase mixed solution). The paste was fed to a spray cooler of which a column bottom part was cooled with liquid nitrogen, and sprayed from a rotary spray nozzle rotating at a rotation speed of 500 rpm to allow spherical granules to be formed. The sprayed paste was cooled and then dropped down to the column bottom part, and the resulting frozen particles were collected. Then, 200 g of the collected particles and 4 g of polyglycerol fatty acid ester (product name: Poem HB; manufactured by Riken Vitamin Co., Ltd.) were mixed and then allowed to stand in an incubator at 20°C for the reaction to proceed.

At 12 hours after the start of the incubation, 0.1 g of the particles in the reaction mixture were sampled and suspended in 100 g of purified water at 36°C. The particles became dissolved. After that, the same operation was carried out every 12 hours, but the particles were soluble in purified water even at 108 hours after the start of the incubation. The reaction was terminated, and the resulting particles were dried in a fluidized bed dryer (model: LAB-1; manufactured by Powrex Corp.) at 15°C for 2 hours, at 30°C for 1 hour, and at 50°C for 1 hour in this order. The dried particles were sieved through a No. 16 mesh sieve (with openings of 1,000 µm), and 20 g of the particles passed through the mesh sieve were obtained as multicore gelatin microcapsules containing L-menthol (Comparative Example Product 2). The obtained multicore gelatin microcapsules were too brittle to be worthy of evaluation.

Table 1 shows the amounts of the raw materials and the gelatin content (% by mass) in the gelatin-transglutaminase mixed solution for the production of the multicore gelatin microcapsules of Examples and Comparative Examples.

**Table 1**

| | | | Example 1 | Example 2 | Example 3 | Example 4 | Comparative Example 1 | Comparative Example 2 |
|---|---|---|---|---|---|---|---|---|
| Amount of raw material (g) | Oil-in-water emulsion composition | Gelatin | 60 | 50 | 40 | 30 | 70 | 20 |
| | | Succinic and fatty acid esters of glycerol | 2 | 2 | 2 | 2 | 2 | 2 |
| | | D-sorbitol | 1 | 1 | 1 | 1 | 1 | 1 |
| | | Purified water | 140 | 150 | 160 | 170 | 130 | 180 |
| | | L-menthol | 40 | 40 | 40 | 40 | 40 | 40 |
| | Transglutaminase suspension | Transglutaminase | 3 | 3 | 3 | 3 | 3 | 3 |
| | | Purified water | 20 | 20 | 20 | 20 | 20 | 20 |
| Gelatin content (% by mass) | | | 22.6 | 18.8 | 15.0 | 11.3 | 26.3 | 7.5 |

### Sensory Evaluation Test

To a chewing gum dough containing 30 parts by mass of gum base, 63 parts by mass of maltitol, and 5 parts by mass of reduced starch syrup, 2 parts by mass of the multicore gelatin microcapsule (Example Products 1 to 4 and Comparative Example Product 1) obtained in Examples and Comparative Examples described above was added. The mixture was kneaded at 40°C for 10 minutes with a batchwise kneader and then shaped into chewing gum pieces each having a weight of 1.5 g (Trial Products 1 to 5). The chewing gums were evaluated for a flavor emanation peak during chewing, and regarding the chewing gums shown to have a flavor emanation peak, the time elapsing from the start of chewing to a maximum emanation of the L-menthol flavor (time to the flavor emanation peak) was measured. The evaluation was performed by six panelists. The flavor emanation peak was evaluated as A when the six panelists perceived "the presence of a flavor emanation peak", as B when three to five of the panelists perceived "the presence of a flavor emanation peak", and as C when zero to two of the panelists perceived "the presence of a flavor emanation peak". The time to the flavor emanation peak was represented as an average of the measurements by the six panelists. Table 2 shows the results.

**Table 2**

| Multicore gelatin microcapsule | Chewing gum | Flavor emanation peak | Time to flavor emanation peak |
|---|---|---|---|
| Example Product 1 | Trial product 1 | A | 2 min 33 sec |
| Example Product 2 | Trial product 2 | A | 2 min 26 sec |
| Example Product 3 | Trial product 3 | A | 2 min 10 sec |
| Example Product 4 | Trial product 4 | A | 1 min 50 sec |
| Comparative Example Product 1 | Trial product 5 | C | - |

As apparent from the results in Table 2, each of the chewing gums (Trial Products 1 to 4) containing the multicore gelatin microcapsules (Example Products 1 to 4) obtained by the production method of the present invention had a time to the flavor emanation peak ranging from 1 minute 30 seconds to less than 4 minutes. In contrast, the chewing gum (Trial Product 5) containing the multicore gelatin microcapsule of Comparative Example Product 1 achieved a delayed emanation of the flavor, but failed intensive emanation of the flavor in a certain time period, and thus the emanation peak was not perceivable.

### REFERENCE SIGNS LIST

1 Film-forming substance
2 Core substance

## Claims

1. A method for producing a multicore gelatin microcapsule, the method comprising the steps of:
(a) adding a transglutaminase to an oil-in-water emulsion composition containing gelatin and a flavoring agent to yield a mixed solution containing the gelatin in an amount of 10 to 25% by mass; and
(b) spraying the mixed solution and cooling and solidifying the sprayed solution;
wherein in the preparation of the oil-in-water emulsion composition the flavoring agent is added as an oil phase to the aqueous phase, and
wherein a flavor emanation peak of the flavoring agent in the oral cavity after start of eating or chewing the multicore gelatin microcapsule falls within the range of from 1 minute 30 seconds to less than 4 minutes.

## Patentansprüche

1. Verfahren zur Herstellung einer Mehrkern-Gelatine-Mikrokapsel, wobei das Verfahren die Schritte:
(a) Zugeben einer Transglutaminase zu einer Öl-in-Wasser-Emulsionszusammensetzung, enthaltend Gelatine und einen Aromastoff, unter Erhalt einer gemischten Lösung, enthaltend die Gelatine in einer Menge von 10 bis 25 Masse-%; und
(b) Sprühen der gemischten Lösung und Kühlen und Verfestigen der gesprühten Lösung umfasst;
wobei bei der Herstellung der Öl-in-Wasser-Emulsionszusammensetzung der Aromastoff als eine Ölphase zu der wässerigen Phase gegeben wird und
wobei das Aromaausströmungsmaximum des Aromastoffes in der Mundhöhle nach Beginn des Essens oder Kauens der Mehrkern-Gelatine-Mikrokapsel in den Bereich von 1 Minute 30 Sekunden bis weniger als 4 Minuten fällt.

## Revendications

1. Procédé de production d'une microcapsule de gélatine à plusieurs noyaux, le procédé comprenant les étapes de :
(a) addition d'une transglutaminase à une composition d'émulsion huile dans eau contenant de la gélatine et un agent aromatisant pour donner une solution mixte contenant la gélatine en une quantité de 10 à 25 % en masse ; et
(b) pulvérisation de la solution mixte et refroidissement et solidification de la solution pulvérisée ;
dans lequel dans la préparation de la composition d'émulsion huile dans eau, l'agent aromatisant est ajouté sous forme d'une phase huileuse à la phase aqueuse, et
dans lequel un pic d'émanation de l'arôme de l'agent aromatisant dans la cavité buccale après le début de la consommation ou du masticage de la microcapsule de gélatine à plusieurs noyaux est dans la plage de 1 minute et 30 secondes à moins de 4 minutes.
